# EUROPEAN PATENT APPLICATION

(11) **EP 0 538 022 A1**
(43) Date of publication of application: **21.04.1993**
(21) Application number: 92309384.3
(22) Date of filing: 14.10.1992
(51) Int. Cl.: H04N 1/46, G02B 27/10

(54) **Optical detecting apparatus**

(30) Priority: 18.10.1991 IL 99790
(71) Applicant: SCITEX CORPORATION LTD., Herzliya 46103 (IL)
(72) Inventor: Shtaierman, Yaacov, Netanya 42306 (IL)
(74) Representative: Hillier, Peter

(57) **Abstract**

Optical detecting apparatus for separating light into a plurality of color separations which is operative in conjunction with at least one lens having a plurality of focal planes, one for each color separation. The optical detecting apparatus includes a housing, at least two detector arrays mounted in the housing and receiving light at an incidence plane along separate, non-coincident light paths from the lens and apparatus for changing an angle between a central one of the light paths and the incidence plane thereby to place each detector array close to one of the focal planes.

## Description

### FIELD OF THE INVENTION

The present invention relates to color separation scanners generally and to the placement of a detector array in the appropriate plane for imaging a desired color in particular.

### BACKGROUND OF THE INVENTION

As is known in the art, a lens in a color separation scanner focuses light onto a plurality of optical detectors, which separate the light into its component color separations. Typically, the optical detectors are joined into an optical head in which, optimally, each optical detector is located at the focal plane for the color separation it is to detect. The term "focal plane" herein refers to the plane of best focus for a lens.

As is known in the art, a lens focuses each color separation, for a given magnification, onto a different focal plane, where the focal planes can be slightly removed from each other. Furthermore, while the more expensive lenses can be designed to focus the entirety of color separations onto specified focal planes for a given magnification, if the scanner uses a set of lenses to provide different operating magnifications, each of the lenses of the set has to be designed to have the same focal planes in all the operating magnifications. This requirement is expensive to obtain.

Prior art scanners are typically designed in a number of ways. The scanner can use expensive lenses that, at the operating magnifications, focus the entirety of color separations on the same specified focal planes. The plurality of detectors are then located at the specified focal planes. A prior art scanner designed in this manner is the SmarTwo Scanner, manufactured by Scitex Corporation Ltd. of Herzlia, Israel.

It will be appreciated that this method requires that the scanner have fixed optical paths and that, if different magnifications are desired, each lens must focus each color separation onto its corresponding specified focal plane. This is an expensive solution.

Alternatively, the scanner can use less expensive lenses whose focal planes are not matched. In this second method, optimal performance is provided for only one magnification since only one lens and the optical head are matched. A prior art scanner designed in this manner is the Smart Scanner, also manufactured by Scitex Corporation Ltd.

Three color Charge Coupled Device (CCD) detector arrays are known in the art. These detectors place three detector arrays, one for each of the color separations, on a single plane. Example three color CCDs are the KLI-5603 manufactured by Eastman Kodak Company and the TCD1440C manufactured by Toshiba of Japan.

Because the three detector arrays lie on the same plane, the three color CCD detector requires, for best performance, that the scanner utilizing it have one or more lens which focuses the entirety of the color separations onto the same focal plane. This requirement is more restrictive and demands lenses which are more expensive than that of the scanners described hereinabove.

### SUMMARY OF THE INVENTION

It is an object of the present invention to provide an optical detector head, included of a plurality of detector arrays, in which each detector array is located close to the focal plane for the color separation it is to detect.

The term "detector array" herein refers to one or more lines of detectors.

There is provided, in accordance with an embodiment of the present invention, optical detecting apparatus for separating light into a plurality of color separations which is operative in conjunction with at least one lens having a plurality of focal planes, one for each color separation. The optical detecting apparatus includes a housing, at least two detector arrays mounted in the housing and receiving light at an incidence plane along separate, non-coincident light paths from the lens and apparatus for changing an angle between a central one of the light paths and the incidence plane thereby to place each detector array close to one of the focal planes.

Additionally, in accordance with an embodiment of the present invention, the apparatus for changing includes apparatus for rotating the incidence plane around a selected axis.

Further, in accordance with an embodiment of the present invention, there are three detector arrays which, together with the housing form a three color Charge Coupled Detector (CCD) array. Alternatively, the three detector arrays and the housing form an optical head.

Still further, in accordance with an embodiment of the present invention, the apparatus for changing includes apparatus for changing the optical detecting apparatus at least from a first orientation associated with a first lens wherein the detector arrays are located in first positions corresponding to first focal planes of the first lens to a second orientation associated with a second lens wherein the detector arrays are located in second positions corresponding to second focal planes of the second lens.

There is further provided, in accordance with an embodiment of the present invention, optical detecting apparatus for separating light into a plurality of color separations which is operative in conjunction with at least one lens having a plurality of focal planes, one for each color separation. The optical detecting apparatus includes a housing, at least two detector arrays located within the housing and receiving light along separate, non-coincident light paths from the lens and apparatus for rotating the housing around a selected axis thereby to place each detector array at one of the focal planes.

There is still further provided, in accordance with an embodiment of the present invention, a method for calibrating optical detecting apparatus for separating light into a plurality of color separations, the optical detecting apparatus having at least two detector arrays and operative in conjunction with at least one lens having a plurality of focal planes, one for each color separation. Tire method includes the steps of moving the optical detecting apparatus to determine an orientation which places a detector plane of one of the detector arrays close to the focal plane for the color separation it detects and repeating the step of moving for any remaining detector arrays. Alternatively, the method can include the steps of rotating the optical detecting apparatus around a selected axis to determine an orientation which places a detector plane of one of the detector arrays close to the focal plane for the color separation it detects and repeating the step of rotating for any remaining detector arrays.

There is further provided, in accordance with an embodiment of the present invention, a method for calibrating an optical detecting apparatus for separating light into a plurality of color separations, the optical detecting apparatus having first, second and third detector arrays and operative in conjunction with at least one lens having first, second and third focal planes, corresponding to first, second and third color separations. The method includes the steps of selecting an axis for rotation and the first detector array, selecting a lens and placing it in a first orientation such that one of the focal planes, corresponding to a first color separation, matches an detector plane of the first detector array, rotating the optical detecting apparatus around the selected axis to determine a second orientation which places the second detector array at a best focal plane for the second separation, rotating the optical detecting apparatus around the selected axis to determine a third orientation which places the third detector array at a best focal plane for the third separation and determining an orientation which provides the best focal performance for the first, second and third separations and saving the orientation for use during regular operation of the optical apparatus.

There is additionally provided, in accordance with an embodiment of the present invention, a method of changing lenses of a color separation scanner wherein the scanner includes an optical detecting apparatus having detector arrays for separating light into a plurality of color separations and at least two lenses, each having a plurality of focal planes, one for each color separation. The method includes the step of when changing between a first lens and a second lens, rotating the optical detecting apparatus to a predetermined orientation such that each detector array is located close to a corresponding one of the focal planes of the second lens. Alternatively, the method can include the step of when changing between a first lens and a second lens, moving the optical detecting apparatus to a predetermined orientation such that each detector array is located close to a corresponding one of the focal planes of the second lens.

There is also provided in accordance with an embodiment of the present invention, a method for integrating into a scanner optical detecting apparatus for separating light into a plurality of color separations, the optical detecting apparatus having at least two detector arrays and operative in conjunction with a lens having a plurality of focal planes, one for each color separation. The method includes the steps of rotating the optical detecting apparatus around a selected axis to determine an orientation which places a detector plane of one of the detector arrays close to the focal plane for the color separation it detects and repeating the step of rotating for any remaining detector arrays.

Finally, there is provided in accordance with an embodiment of the present invention, scanner including an optical detecting apparatus for separating light into a plurality of color separations, operative in conjunction with at least one lens having a plurality of focal planes, one for each color separation. The optical detecting apparatus includes a housing at least two detector arrays mounted in the housing and receiving light at an incidence plane along separate, non-coincident light paths from the lens and apparatus for changing an angle between a central one of the light paths and the incidence plane thereby to place each detector array at one of the focal planes.

### BRIEF DESCRIPTION OF THE DRAWINGS

The present invention will be understood and appreciated from the following detailed description, taken in conjunction with the drawings in which:
Fig. 1 is a schematic of a three color CCD rotated in accordance with an embodiment of the present invention;
Fig. 2 is a schematic illustration of an optical head having three detector arrays, constructed and operative in accordance with an embodiment of the present invention;
Fig. 3 is a schematic illustration of apparatus for rotating either of the optical elements of Figs. 1 or 2;
Fig. 4A is a schematic illustration of the top view of a prior art three color CCD;
Fig. 4B is a schematic illustration of the prior art three color CCD of Fig. 4A, in side view, operative conjunction with a lens; and
Fig. 5 is a schematic illustration of a prior art optical head having three detector arrays.

### DETAILED DESCRIPTION OF A PREFERRED EMBODIMENT

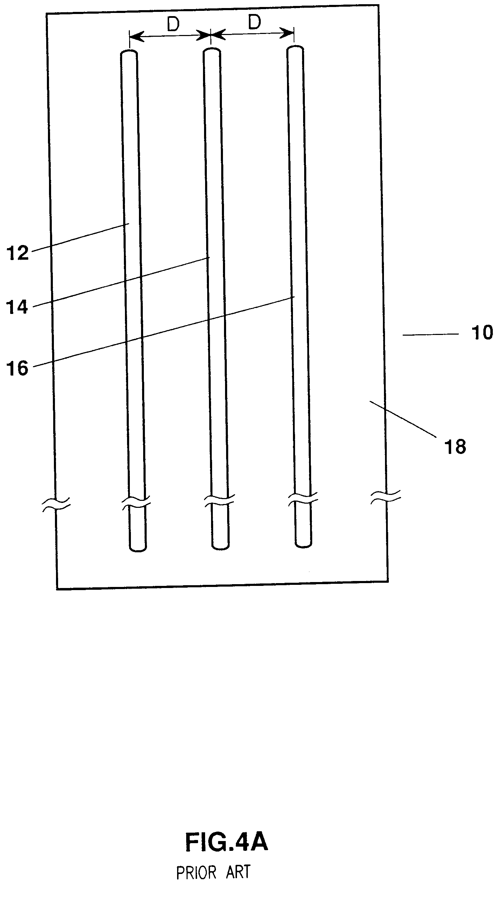

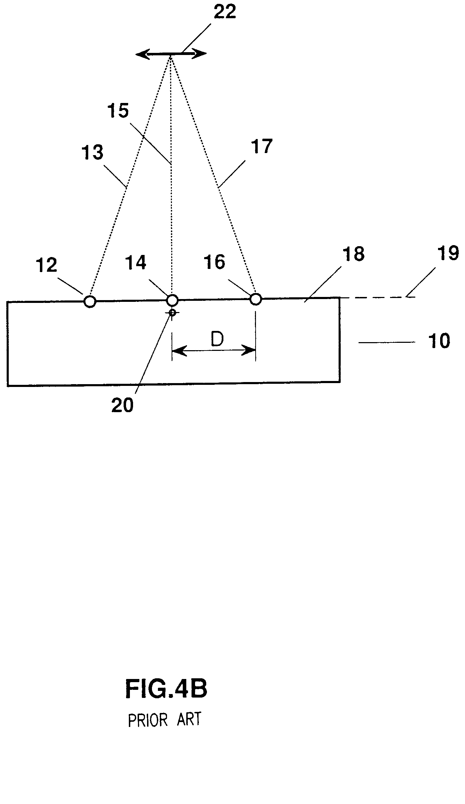

Reference is now briefly made to Figs. 4A and 4B which respectively show a top view of a three color CCD detector array 10 and a side view of array 10 in conjunction with a lens 22. Three color CCD 10 comprises three single color separation detector arrays 12, 14 and 16 each detecting one of three color separations, such as Red, Green and Blue (RGB). The detector arrays 12, 14 and 16 are mounted along an "incidence plane" 19 in a housing 18 such that there is a distance between arrays 12 and 14 and between arrays 14 and 16, wherein the distances are shown of equal size, marked D. The term "incidence plane" herein refers to the plane of the detector array along which the detector arrays 12, 14 and 16 are located.

As mentioned in the Background of the Invention, the detector arrays 12, 14 and 16 are located on the same plane. However, the light paths to them, respectively labeled 13, 15 and 17, are not coincident with one another.

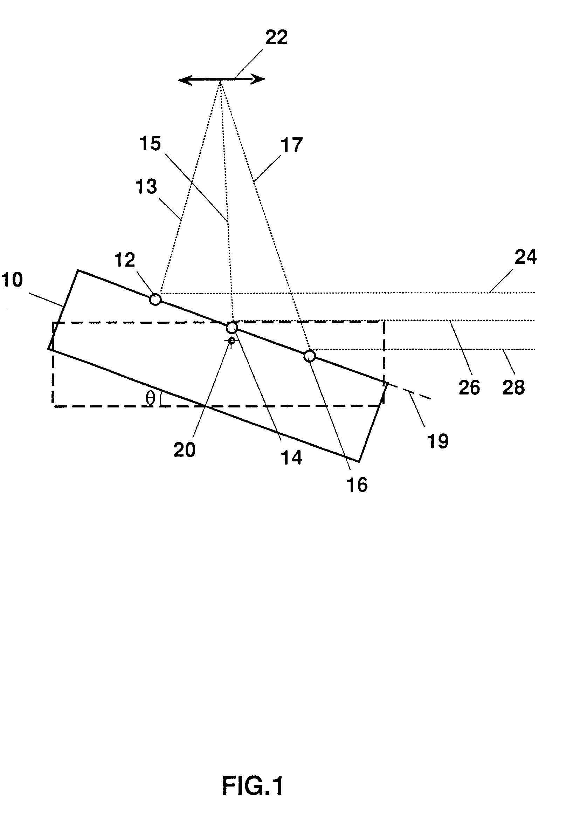

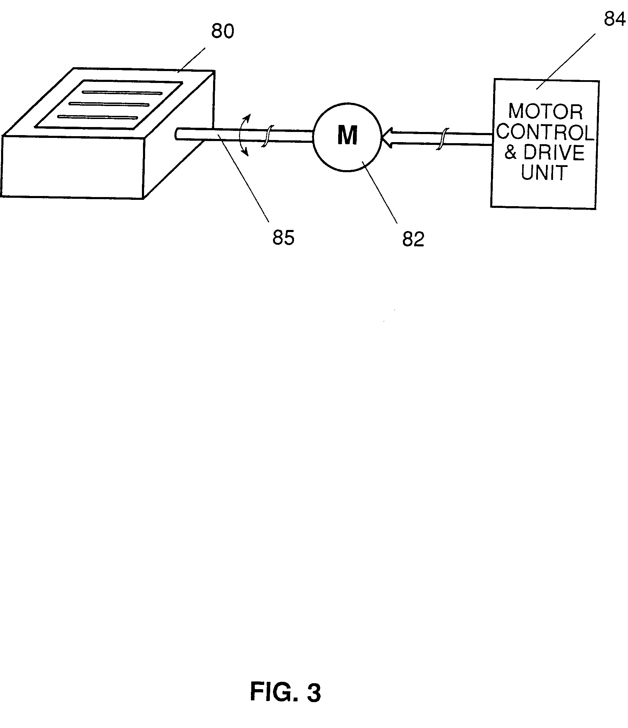

In accordance with an embodiment of the present invention and as shown in Fig. 1 to which reference is now made, the lack of coincidence of light paths 13, 15 and 17 can be utilized to place detector arrays 12, 14 and 16 on different detector planes. This is achieved by rotating the three color CCD 10 about an axis 20 through an angle Θ. An example apparatus for rotating the CCD 10 is provided in Fig. 3, described in more detail hereinbelow.

Because of the rotation, light coming through the lens 22 will reach detector array 12 at a detector plane 24, detector array 14 at a detector plane 26 and detector array 16 at a detector plane 28. Thus, if lens 22 has focal planes which are generally close to detector planes 24, 26 and 28, then the rotated three color CCD 10 will be able to generally optimally detect the color separations.

Furthermore, other lenses 22 can be accommodated without requiring that their focal planes match each other. The accomodation is performed by rotating, for each selected lens, the three color CCD 10 to a selected angle such that the resultant detector planes generally match the focal planes of the selected lens.

It will be appreciated that axis 20 can be located anywhere so as to place detector planes 24, 26 and 28 in the desired locations as defined by the selected lens. It will be noted that detector array 14 detects the color separation having the central focal plane.

It will be noted that, in Fig. 1, detector planes 24 and 28 are respectively located at a distance DsinΘ above and below detector plane 26. Hence, the distance between each of the other two focal planes to the central focal plane should be similar for the selected magnification; however, if they are not similar, the detection can still be better than that achievable without rotation.

A scanner having an optical head with a three color CCD 10 can be calibrated as follows, wherein the following method is repeated for each lens 22:
a) select a detector array, such as detector array 14, close to the selected axis, such as axis 20, around which the three color CCD 10 will be rotated;
b) place the selected lens 22 such that the focal plane of the separation which the selected array 14 is to detect matches the detector plane of array 14;
c) rotate the three color CCD 10 around the selected axis to determine the angle which places a second detector array, such as array 16, at the best focal plane for a second separation;
d) rotate the three color CCD 10 around the selected axis to determine the angle which places a third detector array, such as array 12, at the best focal plane for a third separation; and
e) determine the angle Θ which provides the best focal performance for the three separations and save it for use during regular operation.

It will be appreciated that the above-described calibration method is simpler than prior art optical head calibrations which involve moving individual detector arrays to their detector planes.

During regular operation, upon selection of a given magnification and lens, the three color CCD 10 is rotated to the angle Θ which was determined for that lens 22 during the calibration described hereinabove.

If the scanner has only one lens 22 used for only one magnification, then in accordance with this embodiment of the present invention, the CCD 10 is fixed at the determined angle during the calibration process.

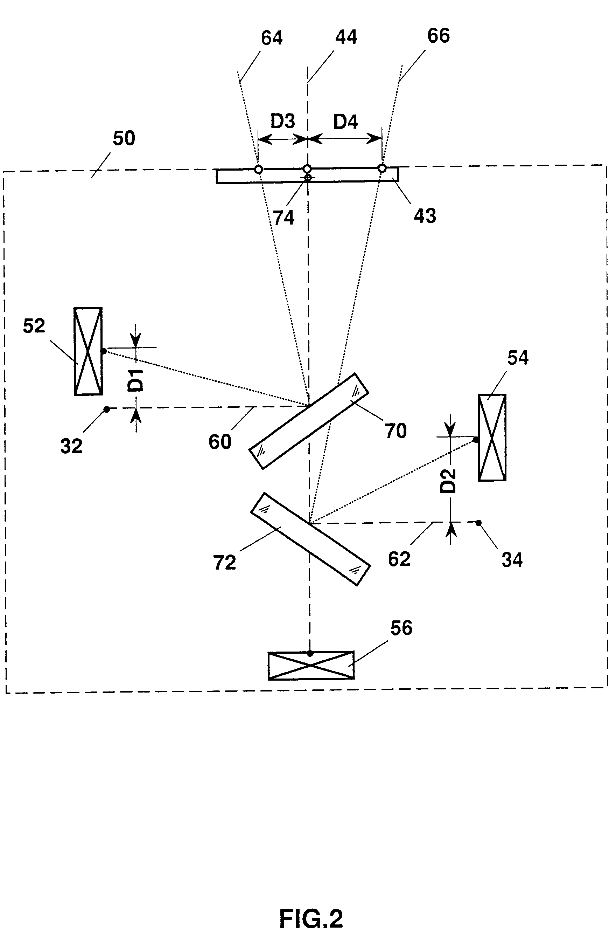

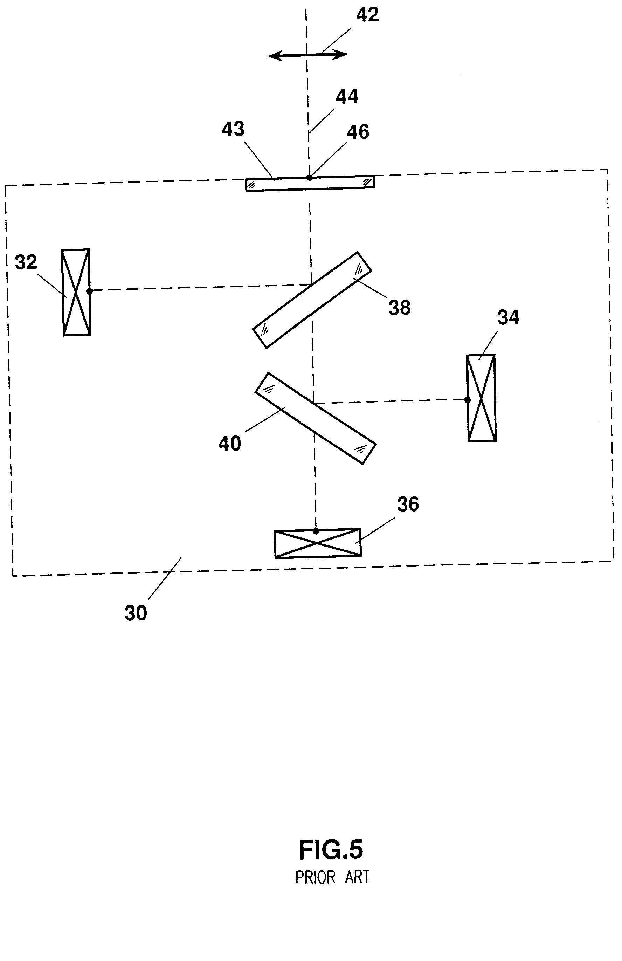

It will be appreciated by those skilled in the art that the present invention is not limited to CCDs having three color detector arrays. It can be implemented with a CCD having more than one color detector array or with an optical head containing more than one separate detector array and associated color filters as described hereinbelow with respect to Fig. 2. To understand the invention of Fig. 2, an example prior art optical head 30 will first be discussed with reference to Fig. 5.

The example prior art optical head 30 of Fig. 5 comprises a plurality of single color detector arrays 32, 34 and 36 with associated filters 38 and 40 for providing each detector array with a color separation to be detected.

White light arriving from a lens 42 enters the optical head through an entrance glass 43 and is thereafter separated as follows: a portion of the light in a first color range, for example the red range, is reflected from filter 38 towards detector array 32. The remaining light is passed through filter 38. Light of a second color range, for example the blue range, is reflected by filter 40 towards detector array 34 and the remaining light, for example in the green color range, is passed through filter 40 towards detector array 36.

Detector arrays 32, 34 and 36 are located so that the light arriving at them is coincident on a single light path 44. Light path 44 enters through glass 43 at a single entrance line, shown in the side view of Fig. 5 as a point 46. For a lens 42 with a plurality of focal planes, the detector arrays 32, 34 and 36 can be translated, during the head assembly process, along the light path towards or away from their associated filter 38 or 40 until, for the selected magnification, the separation which they detect is optimal focussed. For a lens 42 with one focal plane for the entirety of color separations, the locations of detector arrays 32, 34 and 36 are designed so that the length of the light path from point 46 to each detector array is equivalent.

It will be noted that optical head 30 is equivalent to a single detector array placed along light path 44.

In accordance with an embodiment of the present invention and with reference to Fig. 2, detector arrays 52, 54 and 56 of an optical head 50 are located on a plurality of different light paths, 64, 44 and 66, respectively. Typically, detector array 56 is located along optical path 44 at the same location as detector array 36 (Fig. 5) and detector arrays 52 and 54 are located in positions translated from detector arrays 32 and 34, respectively, in directions perpendicular to the optical paths to the detector arrays 32 and 34. Fig. 2 compares the optical head of the present invention with that of prior art optical head 30 by including the detector arrays 32 and 34 as dots and by marking the light paths to them with dotted lines.

Specifically, during manufactures, detector arrays 52 is placed a distance D₁ in a direction perpendicular to a light path, marked 60, to detector array 32 and detector array 54 is placed a distance D₂ in a direction perpendicular to the light path, marked 62, to detector array 34.

Because of this placement, the light paths to detector arrays 52 and 54 are light paths 64 and 66. At the entrance glass 43, light paths 64 and 66 are separated from light path 44 by the distance D₃ and D₄, respectively. Filters 70 and 72, functionally similar to filters 38 and 40, are located so as to reflect light paths 64 and 66 towards detector arrays 52 and 54, respectively.

It will be appreciated that optical head 50 is functionally similar to three color CCD 10 in that the light paths to each detector array do not coincide. Furthermore, the lenghs of the light paths within the optical head 50 are fixed. Therefore, the entrance glass 43 functions as the "incidence plane" of the optical head 50, and rotation of optical head 50, for example, around an axis 74 through entrance glass 43, separates the detector planes of detector arrays 52, 54 and 56. The distance between the detector planes depends on the size of distances D₁ and D₂ and the rotation angle Θ.

It will further be appreciated that, because D₁ and D₂ can have different values, the optical head 50 is not constrained to work with lenses 22 whose focal planes are generally symmetrically located, as is the case for the three color CCD 10.

The calibration and regular operation of optical head 50 within a scanner is typically performed according to the method described hereinabove.

Reference is now made to Fig. 3 which illustrates apparatus for rotating optical detecting element 80, such as optical head 50 or three color CCD 10. The apparatus for rotating comprises a motor 82, such as a stepper motor, associated with a motor control and drive unit 84, such as a microcontroller and driver circuitry. A shaft 85 of motor 82 is typically attached to the selected axis of rotation of the optical detecting element 80. Alternatively, shaft 85 can be attached to gear apparatus (not shown) whose axis is along the selected axis of rotation.

During calibration and regular operation, motor control and drive unit 84 commands motor 82 to rotate optical detecting element 80 to a selected angle. During regular operation, the selected angle is one of the angles determined during the calibration operation.

It will be noted that the present invention changes the angle between a plane of the optical element 80 and the light path 15 (Fig. 1) or 44 (Fig. 2) to the central detector array. As will be appreciated by persons skilled in the art, the present invention can be implemented by translation of optical element 80 as well as by rotation. Furthermore, the present invention can be implemented by fixing optical element 80 in space and rotating a mirror placed between the lens 22 and the optical element 80.

It will be appreciated by persons skilled in the art that the present invention is not limited to what has been particularly shown and described hereinabove. Rather, the scope of the present invention is defined only by the claims that follow.

## Claims

1. Optical detecting apparatus for separating light into a plurality of color separations, operative in conjunction with at least one lens having a plurality of focal planes, one for each color separation, the optical detecting apparatus comprising:
a housing;
at least two detector arrays mounted in said housing and receiving light at an incidence plane along separate, non-coincident light paths from said lens; and
means for changing an angle between a central one of said light paths and said incidence plane thereby to place each detector array close to one of said focal planes.

2. Optical detecting apparatus according to claim 1 and wherein said means for changing comprises means for rotating said incidence plane around a selected axis.

3. Optical detecting apparatus according to claim 1 and wherein said at least two detector arrays comprise three detector arrays and wherein said three detector arrays and said housing form a three color Charge Coupled Detector (CCD) array.

4. Optical detecting apparatus according to claim 1 and wherein said at least two detector arrays and said housing form an optical head.

5. Optical detecting apparatus according to claims 1 and 2 and wherein said means for changing includes means for changing said optical detecting apparatus at least from a first orientation associated with a first lens wherein said detector arrays are located in first positions corresponding to first focal planes of said first lens to a second orientation associated with a second lens wherein said detector arrays are located in second positions corresponding to second focal planes of said second lens.

6. A method for calibrating optical detecting apparatus for separating light into a plurality of color separations, said optical detecting apparatus having at least two detector arrays and operative in conjunction with at least one lens having a plurality of focal planes, one for each color separation, the method comprising the steps of:
moving said optical detecting apparatus to determine an orientation which places a detector plane of one of said detector arrays close to the focal plane for the color separation it detects; and
repeating the step of moving for any remaining detector arrays.

7. A method for calibrating an optical detecting apparatus for separating light into a plurality of color separations, said optical detecting apparatus having first, second and third detector arrays and operative in conjunction with at least one lens having first, second and third focal planes, corresponding to first, second and third color separations, the method comprising the steps of:
selecting an axis for rotation and said first detector array;
selecting a lens and placing it in a first orientation such that one of said focal planes, corresponding to a first color separation, matches a detector plane of said first detector array;
rotating said optical detecting apparatus around said selected axis to determine a second orientation which places said second detector array at a best focal plane for said second separation;
rotating said optical detecting apparatus around said selected axis to determine a third orientation which places said third detector array at a best focal plane for said third separation; and
determining an orientation which provides the best focal performance for said first, second and third separations and saving said orientation for use during regular operation of said optical apparatus.

8. A method of changing lenses of a color separation scanner wherein said scanner comprises an optical detecting apparatus having detector arrays for separating light into a plurality of color separations and at least two lenses, each having a plurality of focal planes one for each color separation, the method comprising the step of:
when changing between a first lens and a second lens, rotating said optical detecting apparatus to a predetermined orientation such that each detector array is located close to a corresponding one of said focal planes of said second lens.

9. A method of changing lenses of a color separation scanner wherein said scanner comprises an optical detecting apparatus having detector arrays for separating light into a plurality of color separations and at least two lenses, each having a plurality of focal planes one for each color separation, the method comprising the step of:
when changing between a first lens and a second lens, moving said optical detecting apparatus to a predetermined orientation such that each detector array is located close to a corresponding one of said focal planes of said second lens.

10. A method for integrating into a scanner optical detecting apparatus for separating light into a plurality of color separations, said optical detecting apparatus having at least two detector arrays and operative in conjunction with a lens having a plurality of focal planes, one for each color separation, the method comprising the steps of:
rotating said optical detecting apparatus around a selected axis to determine an orientation which places a detector plane of one of said detector arrays close to the focal plane for the color separation it detects; and
repeating the step of rotating for any remaining detector arrays.

11. A method for integrating into a scanner an optical detecting apparatus for separating light into a plurality of color separations, said optical detecting apparatus having first, second and third detector arrays and operative in conjunction with a lens having first, second and third focal planes, corresponding to first, second and third color separations, the method comprising the steps of:
selecting an axis for rotation and said first detector array;
placing said lens in a first orientation such that one of said focal planes, corresponding to a first color separation, matches an detector plane of said first detector array;
rotating said optical detecting apparatus around said selected axis to determine a second orientation which places said second detector array at a best focal plane for said second separation;
rotating said optical detecting apparatus around said selected axis to determine a third orientation which places said third detector array at a best focal plane for said third separation; and
determining an orientation which provides the best focal performance for said first, second and third separations and setting said optical detecting apparatus into said orientation.

12. A scanner comprising:
an optical detecting apparatus for separating light into a plurality of color separations, operative in conjunction with at least one lens having a plurality of focal planes, one for each color separation, the optical detecting apparatus comprising:
a housing;
at least two detector arrays mounted in said housing and receiving light at an incidence plane along separate, non-coincident light paths from said lens; and
means for changing an angle between a central one of said light paths and said incidence plane thereby to place each detector array close to one of said focal planes.

13. A scanner according to claim 12 and wherein said means for changing comprises means for rotating said incidence plane around a selected axis.

14. A scanner according to claim 12 and wherein said at least two detector arrays comprise three detector arrays and wherein said three detector arrays and said housing form a three color Charge Coupled Detector (CCD) array.

15. A scanner according to claim 12 and wherein said at least two detector arrays and said housing form an optical head.

16. A scanner according to claim 12 and 13 and wherein said means for changing includes means for changing said optical detecting apparatus at least from a first orientation associated with a first lens wherein said detector arrays are located in first positions corresponding to first focal planes of said first lens to a second orientation associated with a second lens wherein said detector arrays are located in second positions corresponding to second focal planes of said second lens.
